# EUROPEAN PATENT APPLICATION

(11) **EP 4 187 911 A1**
(43) Date of publication of application: **31.05.2023**
(21) Application number: 22207296.9
(22) Date of filing: 14.11.2022
(51) Int. Cl.: H04N 23/60

(54) **IMAGE CAPTURING APPARATUS, METHOD OF CONTROLLING THE SAME, AND STORAGE MEDIUM**

(30) Priority: 29.11.2021 JP 2021193677
(71) Applicant: Canon Kabushiki Kaisha, Ohta-ku Tokyo 146-8501 (JP)
(72) Inventor: MORODA, Hajime, Tokyo, 146-8501 (JP)
(74) Representative: Canon Europe Limited

(57) **Abstract**

An image capturing apparatus (1) configured to transmit an instruction to an external device includes an image capturing unit (13), a reception unit (15) that receives an instruction to the external device, a transmission unit (15) that transmits the instruction to the external device for which the reception unit has received the instruction, and a display control unit (11) that, when the external device does not execute a process according to the instruction transmitted by the transmission unit, superimposes information about the external device on an image of the external device captured by the image capturing unit.

## Description

### BACKGROUND OF THE INVENTION

### Field of the Invention

The present invention relates to an image capturing apparatus, a method of controlling the same, and a storage medium and, in particular, relates to a technique for superimposing information about an external device on an image of the external device captured by an image capturing unit.

### Description of the Related Art

A known monitoring apparatus in the related art is capable of video monitoring and audio acquisition by remote control via a network or a private line. Monitoring apparatuses can connect to an external device to acquire information or control the external device. External devices generally include a light emitting diode (LED) as an indicator. The LED may be used, for example, to identify the external device by lighting or blinking.

Japanese Patent Laid-Open No. 2003-319214 discloses a battery-operated image capturing apparatus in which the battery level is indicated by an LED and in which the lower the battery level, the less power is consumed by the LED.

Some battery-operated external devices cannot receive external instructions, such as commands, because they are in a sleep mode or are incapable of communication due to failure. In such a case, even if an instruction to light or blink the indicator is transmitted from a monitoring apparatus to the external device to identify the external device, the indicator of the external device can fail to light or blink.

As a result, the external device that gives no response and whose indicator does not light or blink cannot be identified.

### SUMMARY OF THE INVENTION

The present invention in its first aspect provides an image capturing apparatus as specified in claims 1 to 18.

The present invention in its second aspect provides a method of controlling an image capturing apparatus as specified in claim 19.

The present invention in its third aspect provides a non-transitory storage medium as specified in claim 20.

Further features of the present invention will become apparent from the following description of exemplary embodiments with reference to the attached drawings.

### BRIEF DESCRIPTION OF THE DRAWINGS

Fig. 1 is a diagram illustrating an example of the configuration of a monitoring system according to first and second embodiments.
Fig. 2 is a diagram illustrating an example of the configuration of a monitoring apparatus.
Fig. 3 is a diagram illustrating an example of a display screen for external device management.
Fig. 4 is a diagram illustrating an example of a display screen for setting a superimposed display.
Fig. 5 is a diagram illustrating an example of a display screen of a viewer.
Fig. 6 is a diagram illustrating an example of a display screen that prompts a user to display information in a viewer.
Fig. 7 is a diagram illustrating an example of a display screen of a viewer.
Fig. 8 is a flowchart illustrating an example of the process of the monitoring apparatus.
Fig. 9 is a flowchart illustrating an example of the process of the monitoring apparatus.

### DESCRIPTION OF THE EMBODIMENTS

Embodiments of the present invention will be described hereinbelow with reference to the accompanying drawings.

### First Embodiment

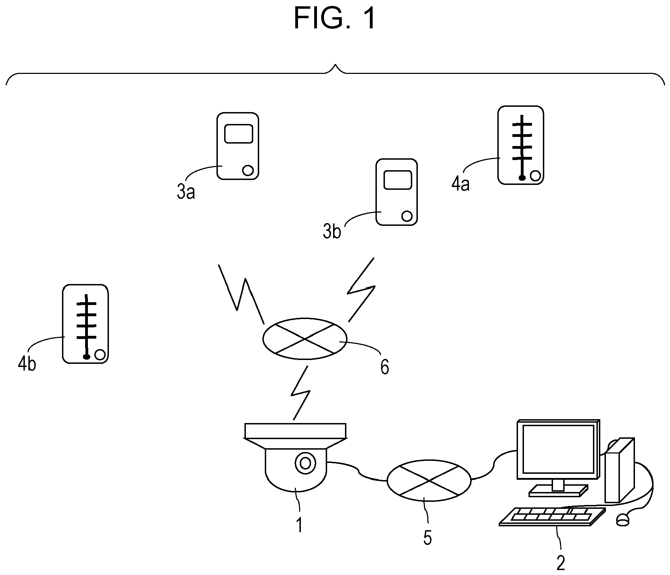

Fig. 1 is a diagram illustrating an example of the configuration of a monitoring system according to a first embodiment.

The monitoring system of this embodiment includes a monitoring apparatus 1, a client apparatus 2, external devices 3a and 3b, and external devices 4a and 4b.

The monitoring apparatus 1 is a monitoring camera that captures a moving image of a subject, such as a person. One example of the monitoring apparatus 1 is a network camera. The monitoring apparatus 1 communicates with the client apparatus 2, the external devices 3a and 3b, and the external devices 4a and 4b. The monitoring apparatus 1 is an image capturing apparatus, which is an example of the application of the present invention, including an image capturing unit capable of transmitting various commands and other instructions to external devices. The image capturing unit can capture images including a moving image.

The client apparatus 2 controls the operation of the monitoring apparatus 1. One example of the client apparatus 2 is an information processing apparatus, such as a personal computer (PC). The client apparatus 2 includes a display and functions as a display control apparatus. The client apparatus 2 transmits various control commands to the monitoring apparatus 1. Examples of the control commands include commands to light or blink the indicator of each external device and commands to control the monitoring apparatus 1. The monitoring apparatus 1 transmits responses to received control commands to the client apparatus 2.

The external devices 3a and 3b and the external devices 4a and 4b communicate with the monitoring apparatus 1 via a network 6. The monitoring apparatus 1 transmits control commands to the external devices 3a and 3b and the external devices 4a and 4b. The external devices 3a and 3b and the external devices 4a and 4b transmit notification commands about the statuses of the external devices 3a and 3b and the external devices 4a and 4b, respectively, to the monitoring apparatus 1. The external devices 3a and 3b and the external devices 4a and 4b, if they are detection devices including a sensor, such as a passive infrared ray (PIR) or a gas sensor, are configured to sense the surrounding environment with the sensor and to transmit information indicating the result of sensing using notification commands. The external devices 3a and 3b and the external devices 4a and 4b, if they are operating devices having a mechanism including a motor or an electric circuit, such as smart plugs or door locks, are configured to operate the motor or the electric circuit according to externally received control commands. The external devices 3a and 3b and the external devices 4a and 4b are not limited to detection devices and operating devices. In some embodiments, the external devices 3a and 3b and the external devices 4a and 4b have other functions or combinations of their respective functions. In this embodiment, the external devices 3a and 3b are moving-object detection sensors that detect a moving object passing in front of the external devices 3a and 3b. The external devices 4a and 4b are temperature sensors that sense the ambient temperature.

The monitoring apparatus 1 and the client apparatus 2 are connected so as to communicate with each other via a network 5. One example of the network 5 includes a plurality of routers, switches, and cables that satisfy Ethernet^{®} or another communication standard. However, any communication standard, any scale, and any configuration that enable communication between the monitoring apparatus 1 and the client apparatus 2 may be employed.

The monitoring apparatus 1 and the external devices 3a and 3b and the external devices 4a and 4b are connected so as to communicate with each other via the wireless or wired network 6. One example of the network 6 is a network conforming to Z-Wave, Zigbee^{®}, a wireless local area network (LAN), or another communication standard. However, any communication standard, any scale, and any configuration that enable communication between the monitoring apparatus 1 and the external devices 3a and 3b and the external devices 4a and 4b may be employed.

The external devices 3a and 3b and the external devices 4a and 4b each include an indicator, such as a light emitting diode (LED). The indicators blink when the external devices 3a and 3b and the external devices 4a and 4b each receive an indicator-blink instruction command transmitted from the monitoring apparatus 1. In this embodiment, the indicators blink. Alternatively, the indicators may be lit. If the communication standard of the network 6 is Z-Wave, the indicator-blink instruction command is an indicator set command. The blinking scheme for the indicators, such as the intensity and the period of time of blinking light and the ratio of ON to OFF of light emission of one blinking, may be specified by an indicator-blink instruction command or may be determined in advance for the external devices. One example application of blinking of the indicators is an application for identifying an external device operated on the display screen from external devices installed. Applications of the indicators are not limited to the above. The indicators may be used to indicate the respective statuses of the external devices 3a and 3b and the external devices 4a and 4b.

The external devices 3a and 3b are powered by batteries and enters a sleep mode to save power consumption. For this reason, the external devices 3a and 3b may not be capable of receiving external control commands at all times. In other words, even if an indicator-blink instruction command is transmitted from the monitoring apparatus 1, the indicators of the external devices 3a and 3b may not blink depending on the timing. Examples of the reason that the external devices 3a and 3b may not be capable of constant communication include not only the sleep mode for battery power saving but also interruption of communication because they are mobile devices (e.g. the mobile device moves out of communication range of the network to which it is connected). In the case where the communication standard of the network 6 is Z-Wave, the external devices 3a and 3b whose listening bit in the capability field of the node information frame is zero may not be capable of constant communication. The external devices 4a and 4b may be or may not be capable of constant communication.

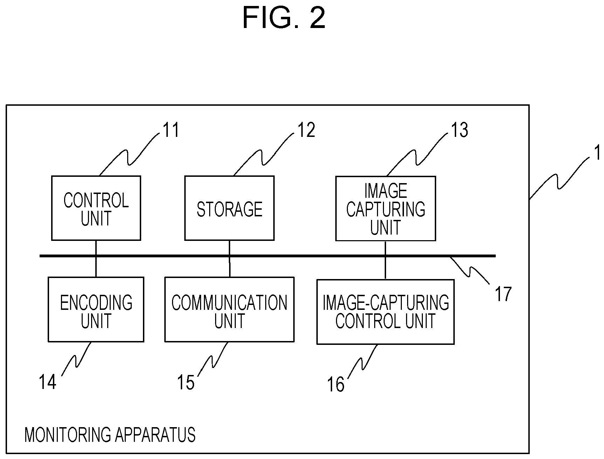

The configuration of the monitoring apparatus 1 will be described. Fig. 2 is a diagram illustrating an example of the configuration of the monitoring apparatus 1.

The monitoring apparatus 1 includes a control unit 11, a storage 12, an image capturing unit 13, an encoding unit 14, a communication unit 15, and an image-capturing control unit 16. The components of the monitoring apparatus 1 are connected with one another via a bus 17.

The control unit 11 controls the entire monitoring apparatus 1. One example of the control unit 11 is a central processing unit (CPU).

The storage 12 stores various data. The storage 12 is used, mainly, as a storage area for programs that the control unit 11 executes, a work area for executing the programs, and a storage area for various data, such as external-device management information, information about the sleep mode of the external devices 3a, 3b, 4a, and 4b, information about whether commands can be transmitted to and received from the external devices 3a, 3b, 4a, and 4b, and image data that the image capturing unit 13 and the control unit 11 generate. When adding an external device as the object of management, the monitoring apparatus 1 acquires various items of information about the external device, for example, information about whether constant communication is possible, information about sleep release intervals, and supported-command information, and stores the information in the storage 12.

The image capturing unit 13 captures subject images formed by the imaging optical system of the monitoring apparatus 1, converts the acquired analog signals to digital data, performs necessary image processing, and stores the captured images in the storage 12 in sequence. When the captured images are stored in the storage 12, the control unit 11 receives an image acquisition event from the image capturing unit 13.

The encoding unit 14 generates image data by encoding the captured images or generated superimposed images stored by the image capturing unit 13 on the basis of, for example, the joint photographic experts group (JPEG) or H.264 and stores the image data in the storage 12.

The communication unit 15 receives control commands from the external devices 3a, 3b, 4a, and 4b and transmits responses to the control commands to the external devices 3a, 3b, 4a, and 4b. When receiving the control unit 11 from the external devices 3a, 3b, 4a, and 4b, the communication unit 15 receives a command reception event from the communication unit 15. The communication unit 15 transmits control commands generated by the control unit 11 to the external devices 3a, 3b, 4a, and 4b. Furthermore, the communication unit 15 reads the image data encoded by the encoding unit 14 from the storage 12 in sequence and transmits the encoded image data as a video stream to the client apparatus 2.

The image-capturing control unit 16 causes a drive member to perform panning, tilting, rotating, zooming, or focusing on the basis of the value of panning, tilting, rotating, zooming, or focusing designated by the control unit 11 to change the angle of view (also known as the field of view) of the image capturing unit 13. The monitoring apparatus 1 need not have to include the drive member. The monitoring apparatus 1 may execute panning, tilting, rotating, and zooming electronically by clipping images without using the drive member.

A screen displayed on the client apparatus 2 will be described.

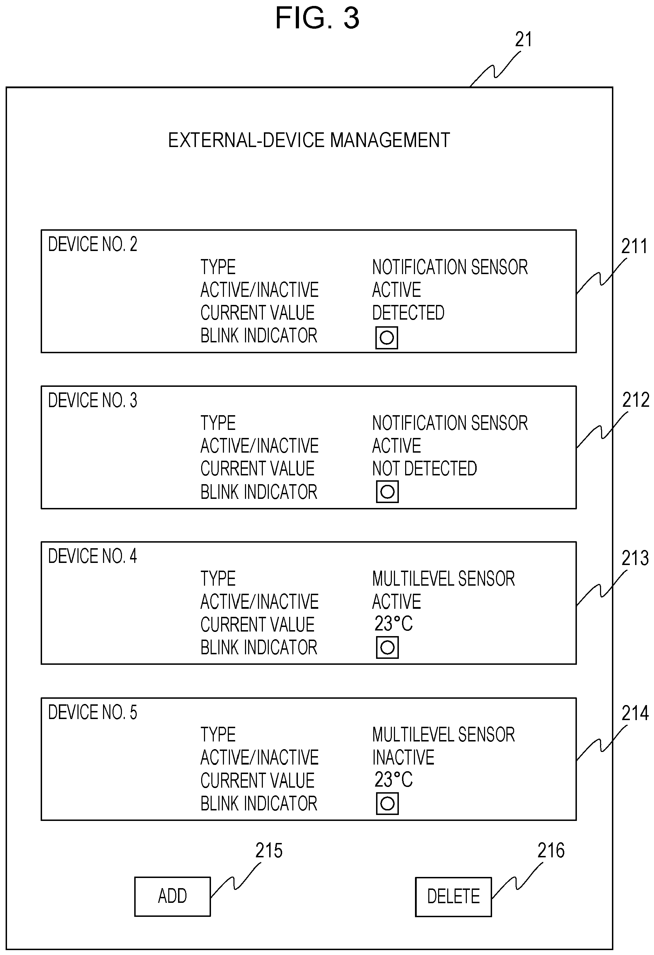

Fig. 3 is a diagram illustrating an example of a display screen 21 for setting external device management of the monitoring apparatus 1.

The display screen 21 is displayed when the control unit of the client apparatus 2 executes a program stored in the storage of the client apparatus 2 on the basis of a user instruction for external-device management settings.

The display screen 21 displays management information 211 to 214 that display respective management information about the external devices 3a and 3b and the external devices 4a and 4b, an add button 215 for adding an additional external device, and a delete button 216 for deleting an external device.

The user shifts the monitoring apparatus 1 to an external-device addable mode by pressing the add button 215 and also shifts the external device to be added to an addable mode by pressing a physical button or the like and registers the external device as an external device to be managed by the monitoring apparatus 1. The method for registering external devices is illustrative only. External devices may be registered by another method, for example, by automatic registration based on external-device identification information registered in advance with the monitoring apparatus 1. Thus, the external devices 3a and 3b and the external devices 4a and 4b are registered with the monitoring apparatus 1 in advance, and the management information 211 to 214 are displayed.

The management information 211 includes Device Number for identifying the registered device, Type indicating the main function of the external device 3a, Active/Inactive indicating whether communication with the external device 3a is interrupted, and Current Value indicating the current status of the function of the external device 3a. The information is transmitted from the external device 3a, is received by the communication unit 15, and is stored in the storage 12. The management information 211 displays "No. 2" for Device NO., "notification sensor" mainly having the function of reporting the status change of the device, such as detection of a moving object, for Type, "active" indicating that the communication is not interrupted for Active/Inactive, and "detected" indicating that a moving object is detected for Current Value. The information displayed in the management information 211 is illustrative only. Any kind and combination of information about the external device 3a may be displayed. The management information 211 also displays an indicator blink button for blinking the indicator of the external device 3a to identify the external device 3a.

The management information 212 on the external device 3b displays "No. 3" for Device NO., and "not detected" indicating that no moving object is detected for Current Value. The other information is the same as that of the management information 211.

The management information 213 on the external device 4a displays "No. 4" for Device NO., "multilevel sensor" having the function of expressing the status of the device, such as temperature, in numerical value for Type, "active" for Active/Inactive, temperature "23°C" for Current Value, and an indicator blink button.

The management information 214 on the external device 4b displays "No. 5" for Device No., and "inactive" indicating that the communication is interrupted for Active/Inactive. The other information is the same as that of the management information 213.

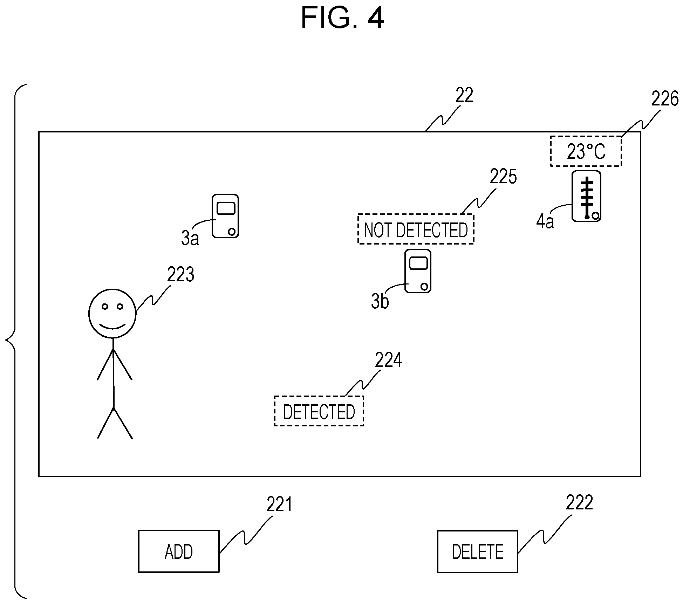

Fig. 4 is a diagram illustrating an example of a display screen 22 for setting superimposition of the current value of the external devices. The display screen 22 is displayed when the control unit of the client apparatus 2 executes a program stored in the storage of the client apparatus 2 on the basis of an instruction to set superimposed display.

The display screen 22 displays the external devices 3a and 3b, the external device 4a, an add button 221 for adding an additional superimposed display, a delete button 222 for deleting a superimposed display, a subject 223, and superimposed-display setting frames 224 to 226 that display the current values of the external devices 3a and 3b and the external device 4a.

The user sets superimposed displays on the display screen 22 that displays the respective current values of the external devices added in advance on the display screen 21. When the add button 221 is pressed, display frames, such as the superimposed-display setting frame 224, are displayed. By designating the device number of the external device to be displayed in the superimposed-display setting frame, a current value obtained from the external device is displayed. The superimposed-display setting frame 224 displays "detected" obtained from the external device 3a. In view of the fact that the external device has a plurality of functions, the kind of current value to be displayed may be designated or the current values of the plurality of functions may be displayed in addition to the device number. Not only the current value of the function of the external device, another value indicating, for example, active/inactive, may be displayed. Setting for limiting the pan/tilt angle or the range of zoom magnification in superimposed display may also be performed. Next, the user drags and drops the superimposed-display setting frame 224 on the display screen 22 to dispose the superimposed-display setting frame 224 in the vicinity of the corresponding external device 3a using an input device, such as a mouse, connected to the client apparatus 2. Specifically, a superimposed-display setting frame is disposed in the vicinity of the corresponding external device (for the superimposed-display setting frame 225, the external device 3b). The settings of the superimposed-display setting frames thus obtained are stored in the storage 12 by the communication unit of the client apparatus 2 via the communication unit 15 of the monitoring apparatus 1. The control unit 11 generates an image in which a superimposed display is superimposed on the captured image on the basis of the stored information in the superimposed-display setting frame and stores the superimposed image in the storage 12.

Selecting a superimposed-display setting frame to be deleted and pressing the delete button 222 allows deleting the setting frame.

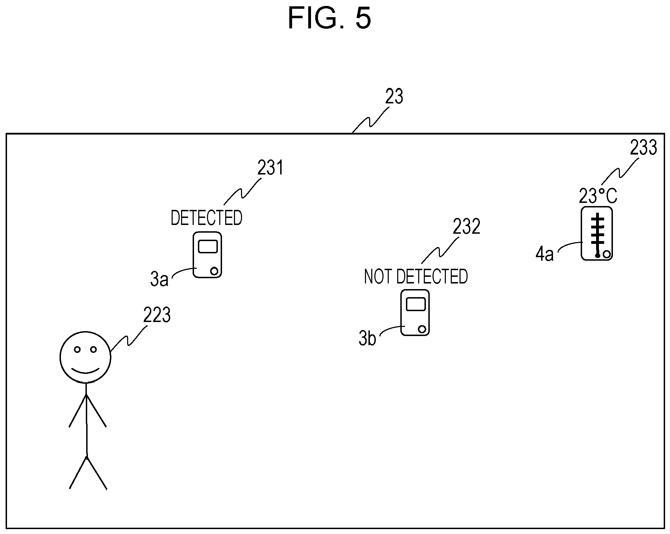

Fig. 5 is a diagram illustrating an example of a display screen 23, which is a viewer screen that displays the superimposed image. The display screen 23 is displayed when the client apparatus 2 executes a program stored in the storage of the client apparatus 2 on the basis of an instruction to display a viewer screen.

The display screen 23 displays the external devices 3a and 3b, the external device 4a, the subject 223, and superimposed displays 231 to 233 corresponding to the external devices 3a and 3b and the external device 4a, respectively, set on the display screen 22.

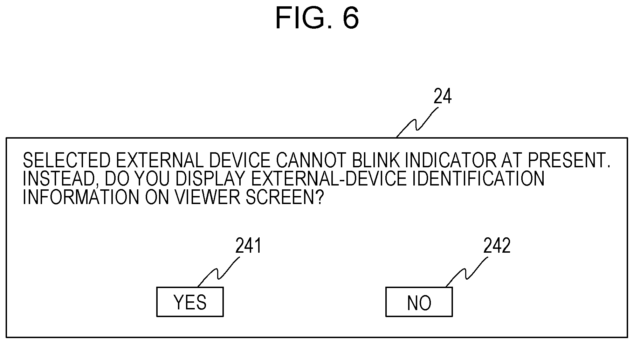

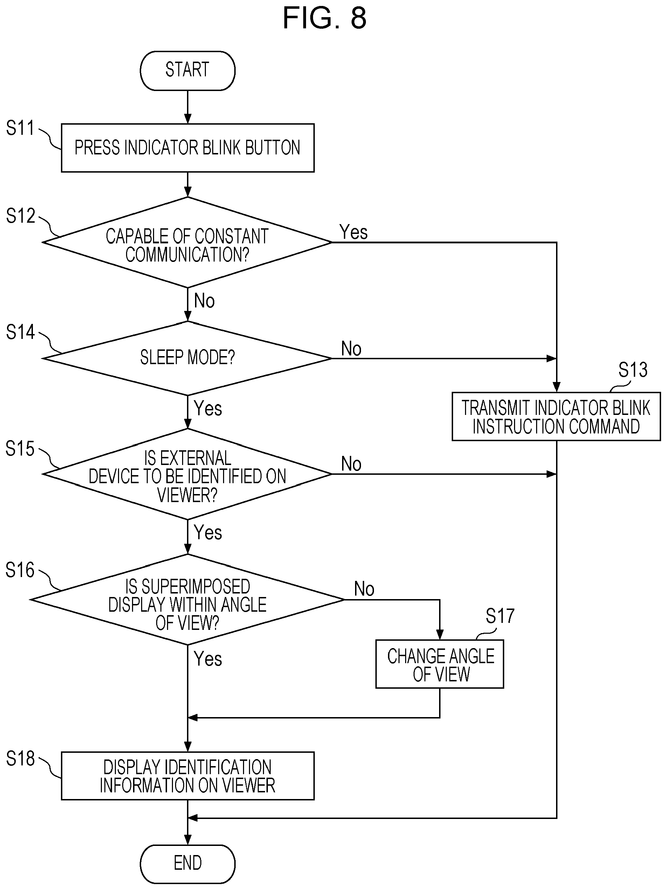

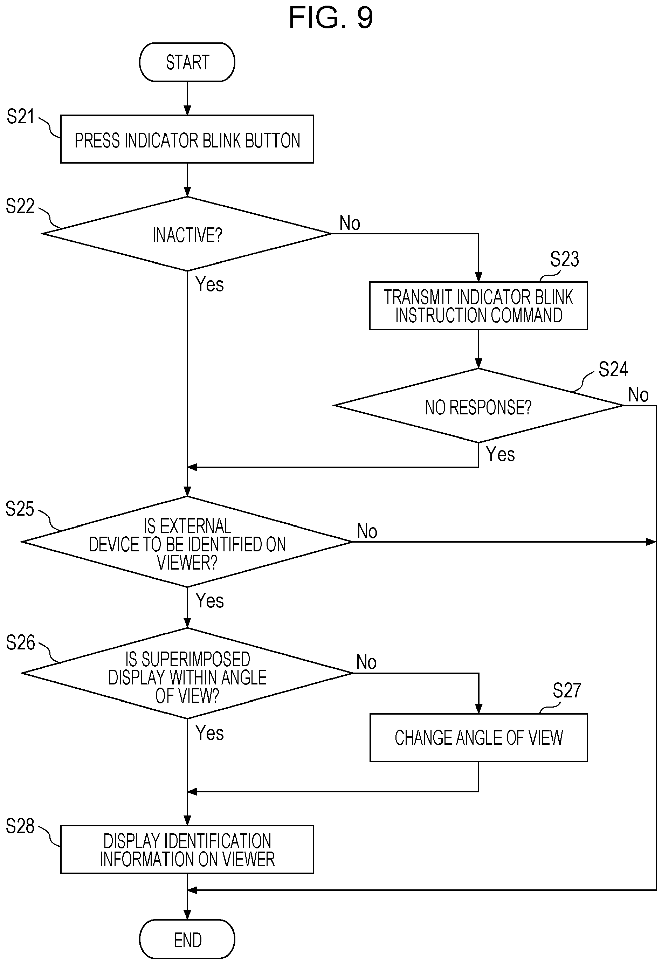

A display screen 24 shown in Fig. 6 is displayed when the control unit of the client apparatus 2 executes a program stored in the storage of the client apparatus 2 at step S15 in the flowchart of Fig. 8 and at step S25 in the flowchart of Fig. 9.

Because the indicator of the selected external device cannot blink in the display screen 24, the display screen 24 displays a message to determine whether to identify the external device on the viewer screen. The display screen 24 also displays a button 241 to determine to identify the external device on the viewer screen and a button 242 not to identify the external device.

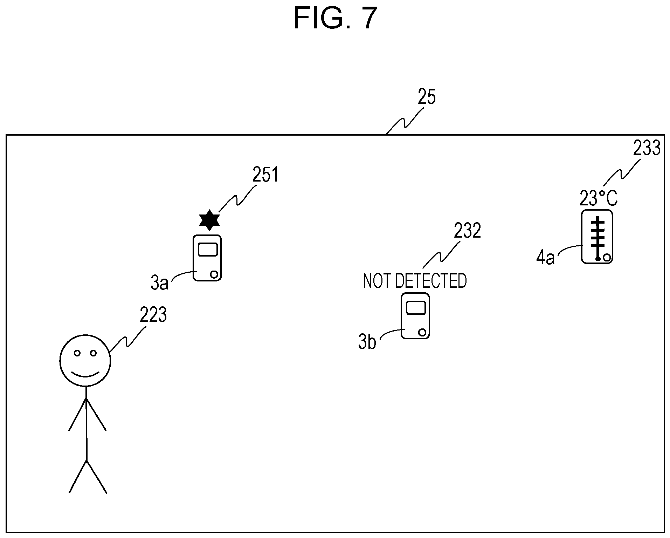

By pressing the button 241 or the button 242, identification information is transmitted by the communication unit of the client apparatus 2 to the monitoring apparatus 1, and the identification information received via the communication unit 15 is stored in the storage 12. If it is determined on the viewer screen to identify the external device, the control unit 11 displays information for identifying the external device on a display screen 25 in Fig. 7, described later. If it is determined to identify the external device on the viewer screen, the display screen displayed on the client apparatus 2 may be shifted from the display screen 21 to the display screen 25.

The display screen 25 shown in Fig. 7 is displayed when the control unit of the client apparatus 2 executes a program stored in the storage of the client apparatus 2 at step S18 in the flowchart of Fig. 8 and step S28 in the flowchart of Fig. 9, described later.

The display screen 25 displays the external devices 3a and 3b, the external device 4a, the subject 223, the superimposed displays 232 and 233 corresponding to the external device 3b and the external device 4a, respectively, set on the display screen 22, and identification information 251 identifying the external device 3a.

In the process of generating a superimposed image, the control unit 11 superimposes the identification information 251, which is an icon identifying the external device 3a, instead of information about the external device 3a, at the position of the superimposed display 231, and stores the generated superimposed image in the storage 12. Examples of the icon include star-like, circular, rectangular, and any other figures. An alternative example of the identification information is a superimposed device number or a superimposed name of the device. The superimposed identification information may be highlighted, for example, periodically blinked, or changed in size or color, so as to be highly visible. Alternatively, the original superimposed display may be highlighted so as to be highly visible while being otherwise unchanged. The identification information may be displayed in various ways. For example, the color may be changed depending on the status of the external device, for example, green for an active status, yellow for a sleep mode, and red for an inactive status, or the degree of highlighting may be changed according to the battery level.

An example of the process of the monitoring apparatus 1 for displaying identification information about the external device on the display screen 25 in the case where the indicator does not blink because the external device is incapable of constant communication will be described with reference to the flowchart of Fig. 8.

The flowchart of Fig. 8 is implemented when the control unit 11 of the monitoring apparatus 1 executes a program stored in the storage 12.

At S11, the control unit 11 receives an indicator-blink instruction command from the communication unit 15. Step S11 is an example of the application of the process of the reception unit of the present invention, at which the control unit 11 receives an instruction (the command) to an external device. Here, the user presses an indicator blink button in the management information for the target external device among the external devices 3a, 3b, and 4a displayed on the display screen 21. When the button is pressed, an indicator-blink instruction command is transmitted from the client apparatus 2. The instruction command is received by the communication unit 15 of the monitoring apparatus 1 and is stored in the storage 12. In the example of this flowchart, the user presses the indicator blink button in the management information 211 to identify the external device 3a.

At S12, the control unit 11 determines whether the external device for which the indicator blink instruction is given is capable of constant communication. Specifically, the control unit 11 acquires information about the external device for which the indicator blink instruction is given from the storage 12 and determines whether the external device is capable of constant communication. In the case where the communication standard of the network 6 is Z-Wave, if the listening bit in the capability field of the node information frame of the external device is 0, the control unit 11 determines that the external device is incapable of constant communication, and if the listening bit is 1, the control unit 11 determines that the external device is capable of constant communication. If the control unit 11 determines that the external device is incapable of constant communication, the process goes to S14, and if capable, the process goes to S13.

At S13, the control unit 11 transmits the indicator-blink instruction command to the external device for which the indicator blink instruction is given at S11 via the communication unit 15 and ends the process of the flowchart. If the communication standard of the network 6 is Z-Wave, the indicator-blink instruction command is an indicator set command. The external device that has received the indicator-blink instruction command blinks the indicator.

At S14, the control unit 11 determines whether the external device for which the indicator blink instruction is given is in a sleep mode. Specifically, the control unit 11 acquires information about the external device for which the indicator blink instruction is given from the storage 12 to determine whether the external device is in the sleep mode. In the case where the communication standard of the network 6 is Z-Wave, if a wake-up notification command is not received after a lapse of 10 seconds or more after a wake-up no more information command or any command is transmitted to the target external device, the control unit 11 determines that the external device is in the sleep mode. Here, the transmission of the wake-up no more information command or the transmission of any command to the target external device is an example of the application of the process of the transmission unit of the present invention, in which the transmission unit transmits the instruction to the external device for which the reception unit received the instruction.

If no wake-up notification command from the target external device is given after a lapse of 10 or more seconds after the wake-up no more information command is transmitted, the control unit 11 determines that the external device may not execute a process according to the instruction transmitted from the transmission unit.

If the remaining time until the external device wakes up is within a predetermined time, the control unit 11 may determine that the external device is not in the sleep mode. Specifically, the control unit 11 calculates the time remaining until the external device wakes up by subtracting the value of the wake-up interval of the seconds field of the wake-up interval report from the time elapsed from the sleep mode. If the remaining time is within a predetermined time, for example, 30 seconds, the control unit 11 may determine that the external device is not in the sleep mode. If the control unit 11 determines that the external device is in the sleep mode, the process goes to S15, and if not, the process goes to S13. If the external device does not support these commands, the process goes to S15.

At S15, the control unit 11 determines whether to display information for identifying the external device on the viewer screen. Specifically, the control unit 11 transmits a command to instruct the client apparatus 2 to display the display screen 24 via the communication unit 15, and the client apparatus 2 displays the display screen 24. The control unit 11 may determine whether superimposed display settings for the target external device are performed from the superimposed display settings stored in the storage 12. If not, the control unit 11 instructs the client apparatus 2 to display a display screen indicating that the indicator does not blink, in place of the display screen 24, and may end the process of this flowchart. When the display screen 24 is displayed, the user selects the button 241 or the button 242, and the client apparatus 2 transmits the information to the monitoring apparatus 1. If the button 241 is selected, the control unit 11 determines to identify the external device on the viewer screen, and the process goes to S16. If not, the process of this flowchart ends. If the process goes to S16, the control unit 11 may transmit an instruction command to shift from the display screen 21 to the display screen 25 to the client apparatus 2 via the communication unit 15.

At S16, the control unit 11 determines whether the superimposed display of the target external device is within the angle of view of the image capturing unit 13. The superimposed display of the target external device set on the display screen 22 can be out of the angle of view because of a change in the angle of view by the image-capturing control unit 16. For example, depending on the pan/tilt angle and the zoom magnification of the monitoring apparatus 1, the superimposed display of the external device may be out of the angle of view, as are the external device 4b and its superimposed display on the display screen 23. The control unit 11 therefore determines whether all the coordinates of the superimposed display of the target external device stored in the storage 12 are within the angle of view of the current captured image. With the setting of limiting the range of the angle of view of the actual superimposed display (for example, only superimposed display with specific zoom magnification) even if the superimposed display is within the angle of view of the captured image, the control unit 11 determines that the superimposed display of the target external device is within the angle of view only when the angle of view is within the range. If the control unit 11 determines that the superimposed display of the target external device is within the angle of view, the process goes to S18, and if not, the process goes to S17. If the monitoring apparatus 1 does not support a change in the angle of view, the process goes to S18.

At S17, the control unit 11 changes the angle of view so that the superimposed display is within the angle of view of the captured image. Specifically, the control unit 11 instructs the image-capturing control unit 16 to change the angle of view so that all the coordinates of the superimposed display of the target external device stored in the storage 12 come within the angle of view of the superimposed display. In this case, the control unit 11 stores the angle of view when setting the superimposed display on the display screen 22 in the storage 12 in advance and provides an instruction to change the angle of view to the same angle as the stored angle of view. Any other change instructions that bring all the coordinates of the superimposed display within the angle of view of the superimposed display may be given, for example, a change instruction to display the superimposed display at the center of the screen.

At S18, the control unit 11 superimposes the identification information about the target external device on the captured image. Specifically, the control unit 11 generates a superimposed image in which identification information that identifies the target external device, such as the identification information 251, is superimposed. A video stream based on the generated superimposed image is delivered to the client apparatus 2 via the communication unit 15, and the client apparatus 2 displays a viewer screen, like the display screen 25.

Step S18 is an example of the application of the process of the display control unit of the present invention. In other words, if the external device does not execute a process according to the instruction transmitted by the transmission unit, then at S18 the display control unit superimposes information about the external device on an image of the external device captured by the image capturing unit.

The flowchart of this embodiment is for the process of superimposing identification information about a current image captured by the image capturing unit 13. Alternatively, a snapshot image in which the superimposed display of the target external device is set on the display screen 22 may be stored in the storage 12, and the snapshot image may be used for the superimposed display of the identification information. Specifically, if at S15 the control unit 11 determines to identify the external device on the viewer screen, the process goes to S18. In generating a superimposed image in which identification information is superimposed at S18, the control unit 11 superimposes identification information at a position for the superimposed display setting of the target external device of the snapshot image.

According to this embodiment, when the user presses an indicator blink button for the external device that the user wants to identify on the display screen 21, and the target external device cannot receive the indicator blink instruction because the target external device is incapable of constant communication, the monitoring apparatus 1 displays, on the client apparatus 2, a superimposed image in which information that identifies the target external device is displayed at the position of the superimposed display using superimposed display setting indicating the status of the target external device. Thus, even if an external device cannot be identified by blinking an indicator, the external device can be identified on the viewer screen.

### Second Embodiment

The first embodiment determines whether the external device is capable of constant communication. This embodiment determines whether the external device is in an inactive status in which communication is interrupted. The configuration of the monitoring system according to this embodiment is the same as that of the first embodiment.

An example of the process of the monitoring apparatus 1 for displaying identification information about the external device on the display screen 25 in the case where the indicator does not blink because the external device is inactive will be described with reference to the flowchart of Fig. 9.

The flowchart of Fig. 9 is implemented when the control unit 11 of the monitoring apparatus 1 executes a program stored in the storage 12.

The process of S21 is similar to the process of S11. However, in the example of this flowchart, the user presses the indicator blink button in the management information 213 to identify the external device 4a.

At S22, the control unit 11 determines whether the external device for which the indicator blink instruction is given is in an inactive status. Specifically, the control unit 11 acquires information indicating whether preceding transmission and reception of an indicator blink instruction command to and from the external device has succeeded from the storage 12, and if the transmission and reception of the command has failed, determines that the external device is in the inactive status in which communication is interrupted because of a failure of the external device, run-out of the battery, or an abnormality in communication environment. For example, the external device 4a is in the inactive status as is apparent from active/inactive in the management information 213. If it is determined that the external device 4a is in the inactive status, the process goes to S25, and if not, the process goes to S23.

At S23, the control unit 11 transmits the indicator-blink instruction command to the external device for which the indicator blink instruction is given at S21 via the communication unit 15. If the communication standard of the network 6 is Z-Wave, the indicator-blink instruction command is an indicator set command.

At S24, the control unit 11 determines whether a response is given from the external device to which the indicator-blink instruction command is transmitted. If no response is given, the external device is determined to be in the inactive state. Specifically, the control unit 11 transmits the indicator-blink instruction command at S23 and waits for a command indicating that the command has been received for a predetermined time (for example, 10 seconds). If the command is given, the control unit 11 determines that the external device is in a responsive status, and if not, the control unit 11 determines that the external device is in an unresponsive status. If no response is given, the control unit 11 may retry to transmit the indicator-blink instruction command a predetermined number of times (for example, three times) to wait for a response. If the control unit 11 determines that the external device is in the unresponsive status, the process goes to S25, and if not, the control unit 11 determines that the indicator of the target external device has blinked, and the process of this flowchart ends.

The processes from S25 to S28 are the same processes as the processes from S15 to S18, respectively.

According to this embodiment, when the user presses an indicator blink button for the external device that the user wants to identify on the display screen 21, and the target external device cannot blink the indicator because being in the inactive status in which communication is interrupted, the monitoring apparatus 1 displays, on the client apparatus 2, a superimposed image in which information that identifies the target external device is displayed at the position of the superimposed display using superimposed display setting indicating the status of the target external device. Thus, even if an external device cannot be identified by blinking an indicator, the external device can be identified on the viewer screen.

### Other Embodiments

While the present invention has been described with reference to exemplary embodiments, it is to be understood that the invention is not limited to the disclosed exemplary embodiments and can be variously modified and changed within the scope of the invention. The above embodiments may be combined as appropriate.

One example is that the external device does not support the indicator-blink instruction command transmitted from the monitoring apparatus 1. Specifically, the external device may not support the indicator set command in the case where the communication standard of the network 6 is Z-Wave. In this case, when the indicator blink instruction button of one external device is pressed, the control unit 11 may check information about a command supported by the target external device stored in the storage 12, and if the indicator-blink instruction command is not supported, may proceed to the process of S15 in the flowchart of Fig. 8.

In another example, part or all of the functional configurations of the monitoring system described above may be installed as hardware in the monitoring apparatus 1, the client apparatus 2, the external devices 3a and 3b, and the external devices 4a and 4b.

The configurations and the processes of the individual embodiments described above may be applied to computers, service equipment, and so on other than the monitoring apparatus 1, the client apparatus 2, the external devices 3a and 3b, and the external devices 4a and 4b.

Although the external devices constituting the monitoring system of the embodiments are the external devices 3a and 3b and the external devices 4a and 4b for the purpose of illustration, the number of external devices may be any number equal to or more than one.

At least part of the configuration of the monitoring apparatus 1 may be implemented by hardware. In the case of hardware, a dedicated circuit may be automatically generated on a field programmable gate array (FPGA) from programs for implementing the individual steps, for example, by using a predetermined compiler. A gate array circuit may be formed as is the FPGA and may be used for implementation as hardware. An application specific integrated circuit (ASIC) may also be used.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all equivalent structures and functions.

## Claims

1. An image capturing apparatus (1) configured to transmit an instruction to an external device, the apparatus comprising:
an image capturing unit (13);
a reception unit (15) that receives an instruction to the external device;
a transmission unit (15) that transmits the instruction to the external device for which the reception unit has received the instruction; and
a display control unit (11) that, when the external device does not execute a process according to the instruction transmitted by the transmission unit, superimposes information about the external device on an image of the external device captured by the image capturing unit.

2. The image capturing apparatus according to Claim 1, wherein, when the external device does not respond to the instruction transmitted by the transmission unit, the display control unit superimposes the information about the external device on the image of the external device captured by the image capturing unit.

3. The image capturing apparatus according to Claim 1, wherein, when the external device for which the reception unit has received the instruction is in a sleep mode, the display control unit superimposes the information about the external device on the image of the external device captured by the image capturing unit.

4. The image capturing apparatus according to Claim 3, wherein, when the external device for which the reception unit has received the instruction is incapable of constant communication with the image capturing apparatus and is in a sleep mode, the display control unit superimposes the information about the external device on the image of the external device captured by the image capturing unit.

5. The image capturing apparatus according to Claim 1, wherein, when the image capturing apparatus is unable to communicate with the external device for which the reception unit has received the instruction, the display control unit superimposes the information about the external device on the image of the external device captured by the image capturing unit.

6. The image capturing apparatus according to Claim 1, wherein the instruction comprises an instruction to light or blink an indicator of the external device, and wherein the process according to the instruction is lighting or blinking of the indicator of the external device or a response to the instruction.

7. The image capturing apparatus according to Claim 6,
wherein the instruction comprises an instruction command to light or blink the indicator of the external device, and
wherein, when the external device does not support to the instruction command, the display control unit superimposes the information about the external device on the image of the external device captured by the image capturing unit.

8. The image capturing apparatus according to Claim 1, wherein the information about the external device comprises information for identifying the external device.

9. The image capturing apparatus according to Claim 1, wherein the display control unit superimposes the information about the external device so as to be blinked or changed in color.

10. The image capturing apparatus according to any one of Claims 1 to 9, wherein the information about the external device comprises a predetermined icon.

11. The image capturing apparatus according to Claim 1, wherein the information about the external device comprises a device number that identifies the external device.

12. The image capturing apparatus according to Claim 1, wherein the information about the external device comprises a name given to the external device.

13. The image capturing apparatus according to Claim 1, wherein the image comprises a moving image captured by the image capturing unit.

14. The image capturing apparatus according to Claim 1, further comprising a changing unit that, when a position set to superimpose the information about the external device is not within an angle of view of the image capturing unit, changes the angle of view of the image capturing apparatus so that the information can be superimposed on the image of the external device captured by the image capturing unit.

15. The image capturing apparatus according to Claim 1,
wherein the display control unit displays a first display screen for managing the external device and a second display screen for superimposing the information about the external device on the image of the external device captured by the image capturing unit, and
wherein the reception unit receives the instruction to the external device via the first display screen.

16. The image capturing apparatus according to Claim 15, wherein, when the external device does not execute the process according to the instruction transmitted by the transmission unit, the display control unit displays a third display screen for selecting whether to display the second display screen.

17. The image capturing apparatus according to Claim 15 or 16, wherein the display control unit superimposes the information about the external device using a snapshot image in setting the superimposed display on the second display screen.

18. The image capturing apparatus according to Claim 1, wherein the information about the external device comprises status information about the external device.

19. A method of controlling an image capturing apparatus including an image capturing unit and configured to transmit an instruction to an external device, the method comprising:
(S11) receiving an instruction to the external device;
(S13) transmitting the instruction to the external device for which the instruction has been received in the reception; and
when the external device does not execute a process according to the instruction transmitted in the transmission,
(S18) superimposing information about the external device on an image of the external device captured by the image capturing unit.

20. A program for causing a computer to function as the image capturing apparatus according to Claim 1.
